Europäisches Patentamt

**European Patent Office**

**Office européen des brevets**

(11) Publication number:

**0 329 204**

**A1**

(12)

# EUROPEAN PATENT APPLICATION

(21) Application number: **89200024.1**

(22) Date of filing: **05.01.89**

(51) Int. Cl.⁴: **B23Q 11/00 , B25D 17/14**

(30) Priority: **11.02.88 NL 8800332**

(43) Date of publication of application:
**23.08.89 Bulletin 89/34**

(84) Designated Contracting States:
**AT BE CH DE ES FR GB GR IT LI LU NL SE**

(71) Applicant: **ENFA B.V.**
**Krekelveldstraat 27 Postbus 12**
**NL-5900 AA Venlo(NL)**

(72) Inventor: **Hendrix, Arnoldus, Josephus**
**Johannes Maria**
**Eugeniasingel 39**
**NL-5913 GK Venlo(NL)**

(74) Representative: **Van Kan, Johan Joseph**
**Hubert, Ir. et al**
**Algemeen Octrooibureau P.O. Box 645**
**Boschdijk 155**
**NL-5600 AP Eindhoven(NL)**

(54) **Envelope for catching drillings.**

(57) Envelope for catching drillings, wherein the front side and at the rear side the envelope is provided with folding lines, by means of which a widening of the side surface over at least part of the side can be obtained.

fig. 1

## Envelope for catching drillings.

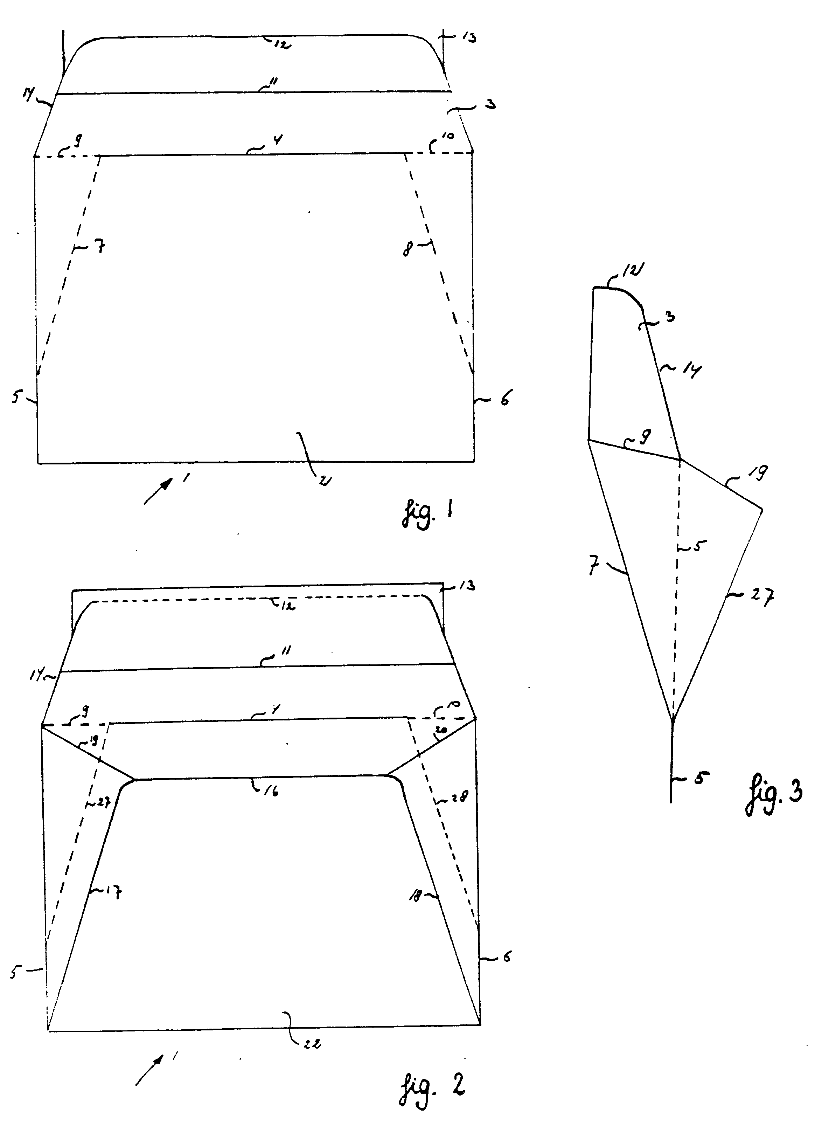

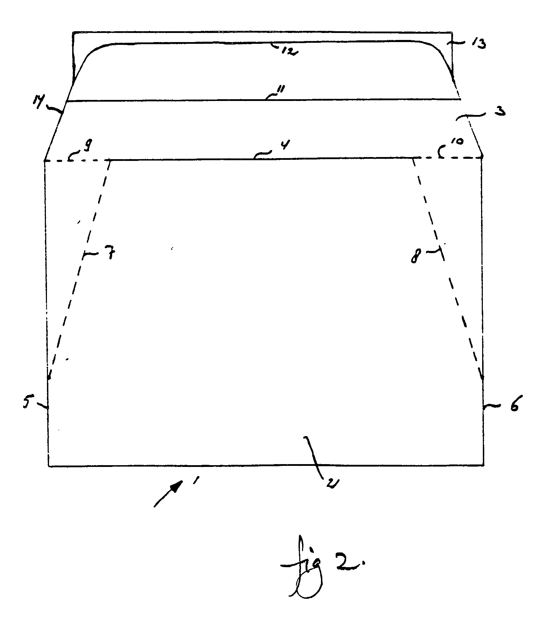

The invention relates to an envelope for catching drillings. It is generally known that during drilling into walls drillings are produced which may fall on the ground and which may spread out. Especially in houses with carpets and fittings this is inconvenient because the drillings must be removed after drilling, e.g. by means of a vacuum cleaner. Because of the falling movement of the drillings said drillings will spread out over a relatively large distance and a relatively large surface, as a result of which cleaning is made more difficult. It is therefore endeavoured to suck the drillings away from the drilling hole directly or to catch them. Sucking is only possible when the drillings are sucked away e.g. by means of a vacuum cleaner hose, but in that case it is necessary that at least two persons are present when the drilling takes place. The catching of the drillings might be effected by providing a container under the drilling hole, in which container the drillings may be received. For this purpose a container has been developed according to the German patent specification 3,500,330, in which fig 1 illustrates a rectangular plate of which a receiving means for dust can be formed, as is illustrated in fig 3. Preferably said plate, as indicated in fig 1, or the means formed thereof, as illustrated in fig 3, is formed of metal or plastic material, intended to be used several times. Said known plate or the container formed thereof has hardly been used in practice because it was not easy to use. Therefore a simple and cheap solution of the problem has been searched for.

Said problems are now solved by means of an envelope for catching drillings according to the invention and the envelope now developed is characterized in that it is provided at the front side and at the rear side with folding lines with which a widening of the side surface may be obtained over at least part of the side. Further it is to be preferred to provide the closing flap of the envelope with a self-adhesive covered with an adhesive protective strip which is easily removed.

The invention will be further explained hereinafter with reference to the following description, whereby reference is made to the accompanying drawing, in which:

fig 1 is a front view of the envelope according to the invention,

fig 2 is a rear view of the envelope, and

fig 3 is a side view of the envelope illustrated in figs 1 and 2 in unfolded application condition.

Fig 1 illustrates a front view of the envelope 1, which is also the front side of the envelope to be used. Like an ordinary envelope the envelope 1 is made up of a main surface 2 and a flap 3 blending into each other via the upper line 4. The vertically extending edges of the main surface 2 are indicated by 5 and 6, whilst the folding lines with which the widening of the side face according to the invention is obtained are indicated by 7 and 8. The parts of the horizontal upper line 4 which indicate the distance along which the folding line is folded are indicated by 9 and 10. The parts 9 and 10 of the folding line 4 are preferably creased, so that the deformation of the side is effected more easily. The flap 3 has an auxiliary line approximately in its centre, said line being provided in order to provide an adhesive and the protective strip 13 up to that level at the rear side. The protective strip 13 is preferably made of paper provided with a silicone coating, said strip being easily removable from an adhesive. The flap 3 has an upper edge 12 and a side edge 14.

As appears from fig 1 the folding lines 7 and 8 extend obliquely from the upper line 4 towards the respective side edges 5 and 6, ending in points located in the lower half of the side edges 5 and 6. In an envelope whereby the main surface is dimensioned approximately 16 x 12 cm and whereby the folding lines 7 and 8 extend as indicated in fig 1 the distances 9 and 10 are about 2.5 cm and the point of intersection of the folding lines 7 and 8 with the respective side edges 5 and 6 is located at about 4 cm from the bottom side of the envelope.

Fig 2 illustrates the rear side of the envelope in open condition, whereby the rear surface 22 is formed by the lines 16, 17 and 18 and whereby the side faces which are bounded at the upper side by the lines 19 and 20 are glued against the rear side of the rear surface 22. The folding lines 27 and 28 at the rear side extend substantially coincident with the respective folding lines 7 and 8 at the front side. Corresponding reference numbers in the figs 1, 2 and 3 indicate corresponding parts of the envelope.

Fig 3 illustrates a side view of the envelope in unfolded condition, from which it can be seen that the part formed by the lines 7, 5 and 9 is a part of the main surface 2 which has become part of the side face, and the part formed by the lines 5, 27 and 19 is a part of the rear side of the envelope which has become part of the side wall of the unfolded envelope.

When being used the envelope in unfolded condition, as illustrated in fig 3, can be glued against the wall after removal of the protective strip 13, directly under the place where the drilling is to take place. It will also be possible to provide the envelope at such a location that the drilling is done through the flap 3 of the envelope, which will preferably be done on a slippery surface where there is a danger that the drill will move out of position. In this framework it will also be possible that the envelope, or at least the flap, is made of non-slippery paper. The adhesive to be used on the upper part of the flap 3 and the protective strip to be used are means known by themselves. Furthermore it will be apparent that the envelope according to the invention is not limited to the specific folding lines 7 - 8 and 27 - 28 as indicated in the drawing, but may extend in several manners as long as there is a reasonable distance between the main surface 2 and the rear surface 22 after folding of the side edges.

## Claims

1. Envelope for catching drillings, characterized in that at the front side and at the rear side the envelope is provided with folding lines, by means of which a widening of the side surface over at least part of the side can be obtained.

2. Envelope according to claim 1, characterized in that the folding line extends obliquely from the upper side at a distance from the side edge towards a point of the side edge located on the lower half of the envelope.

3. Envelope according to claims 1 - 2, characterized in that the folding line extends towards both sides on the front side as well as the rear side.

4. Envelope according to claims 1 - 3, characterized in that its dimensions are approximately 16 x 12 cm and in that the folding line at the upper side extends at 2.5 cm from the edge as far as the edge at 8 cm from the upper side.

5. Envelope according to claims 1 - 4, characterized in that the horizontal upper line (4) is creased along the distance from the edge as far as the folding line.

6. Envelope according to claims 1 - 5, characterized in that the flap (3) is provided with a self-adhesive covered by an adhesive, easily removable protective strip (13).

fig. 1

fig. 2

fig. 3

fig 2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | DE-C-3 500 330 (POSTIUS) | 1,6 | B 23 Q 11/00<br>B 25 D 17/14 |

**TECHNICAL FIELDS SEARCHED (Int. Cl.4)**

B 23 Q
B 25 D

The present search report has been drawn up for all claims

| Place of search | Date of completion of the search | Examiner |
|---|---|---|
| THE HAGUE | 20-04-1989 | DE GUSSEM J.L. |